**Europäisches Patentamt**

**European Patent Office**

**Office européen des brevets**

(19)

(11) Veröffentlichungsnummer : **0 446 614 B1**

## (12) EUROPÄISCHE PATENTSCHRIFT

(45) Veröffentlichungstag der Patentschrift :
**10.11.93 Patentblatt 93/45**

(51) Int. Cl.⁵ : **B62D 47/02, B62D 53/08**

(21) Anmeldenummer : **91101739.0**

(22) Anmeldetag : **08.02.91**

(54) Gelenkdämpfungsvorrichtung an Gelenkomnibussen.

(30) Priorität : **10.03.90 DE 4007684**

(43) Veröffentlichungstag der Anmeldung :
**18.09.91 Patentblatt 91/38**

(45) Bekanntmachung des Hinweises auf die
Patenterteilung :
**10.11.93 Patentblatt 93/45**

(84) Benannte Vertragsstaaten :
**AT CH DE FR GB IT LI NL SE**

(56) Entgegenhaltungen :
**EP-A- 0 122 956**
**EP-A- 0 233 850**
**EP-A- 0 234 414**
**EP-A- 0 245 624**

(73) Patentinhaber : **MAN Nutzfahrzeuge
Aktiengesellschaft
Postfach 50 06 20
D-80976 München (DE)**

(72) Erfinder : **Uttenthaler, Josef, Dipl.-Ing. (FH)
Aventinusstrasse 1
W-8068 Hettenshausen (DE)**

## Beschreibung

Die Erfindung bezieht sich auf eine Gelenkdämpfungsvorrichtung zur Verwendung bei einem Gelenkomnibus mit einem Vorderwagen und einem mit diesem über einen Drehkranz (Drehgelenk) verbundenen Nachläufer, wobei zwischen den beiden Wagenkomponenten wenigstens zwei Hydraulikzylinder oder Stoßdämpfer angeordnet sind, gemäß dem Oberbegriff des Anspruchs 1.

Es ist eine derartige Gelenkdämpfungsvorrichtung nach der EP-A-0122956 bekannt, die zwei gelenkig und im Abstand zueinander am Vorderwagen angeordnete Hydraulikzylinder aufweist, die an der Peripherie des Drehkranzes mit dem Nachläufer, im spitzen Winkel zur Längsmittelebene, verbunden sind.

Eine weitere Gelenkdämpfungsvorrichtung ist aus der nicht vorveröffentlichten DE 39 12 383 C1 bekannt. Mittels dieser Vorrichtung wird eine Charakteristik des Dämpfungsmomentes erzielt, gemäß der schon bei der geringsten Abweichung aus der Geradeausfahrt ein Dämpfungsmoment aufgebaut wird, das sich mit zunehmenden Knickwinkel etwa sinusförmig vergrößert.

Der Erfindung liegt die Aufgabe zugrunde, eine einfache Vorrichtung zur Regelung der Knickstabilität in Abhängigkeit vom Dämpfungsmoment über Knickwinkel unter Verzicht auf eine elektronisch-hydraulische Steuerung und Funktionsüberwachung zu schaffen.

Dies wird erfindungsgemäß durch die kennzeichnenden Merkmale des Anspruchs 1 erreicht.

Solcherart ist es möglich, daß die beiden Hydraulikzylinder oder Stoßdämpfer gleiche Länge, gleichen Hub und gleichen Durchmesser aufweisen, wodurch sowohl Herstellung wie auch Lagerhaltung effizienter werden. Beide Stoßdämpfer oder Hydraulikzylinder haben bei Geradeausfahrt mit leichten Knickbewegungen bereits eine Hubgeschwindigkeit und einen Hebelarm zur Drehgelenkmitte, wodurch sich ein entsprechendes Dämpfungsmoment aufbaut. Der Anstieg des Dämpfungsmomentes über dem Knickwinkel ist in etwa sinusförmig.

Bei der erfindungsgemäß ausgewiesenen Anordnung können die beiden Hydraulikzylinder oder Stoßdämpfer in einer horizontalen Ebene angebracht werden, was eine niedrige Gelenkbauhöhe ermöglicht und somit einen guten Durchgang für die von einem Wagenteil zum anderen führenden Kabel und Leitungen gestattet. Durch Vergrößerung der Abstände der Zylinder- oder Stoßdämpferanlenkungspunkte an Vorderwagen oder Nachläufer können größere Dämpfungsmomente erzielt werden, wobei allerdings auch der Hub entsprechend zu vergrößern ist. Diese Möglichkeit zur Variation der Dämpfungsmoment-Kurve kann gegebenenfalls für die speziellen Einsatzbedingungen oder zur Erzielung optimaler Werte sehr nützlich sein.

Nach einem bevorzugten Merkmal der Erfindung ist in der Verbindungsleitung zwischen den Anschlüssen der Verdrängungsräume des Hydraulikzylinders ein einstellbares Drosselventil angeordnet. Solcherart kann das Dämpfungsmoment modifiziert werden und gegebenenfalls den geographischen oder jahreszeitlichen Streckenbedingungen angepaßt werden. Es kann auch in der Verbindungsleitung zwischen den Anschlüssen des Hydraulikzylinders jedem Anschluß je ein einstellbares Drosselventil zugeordnet sein, wobei der jeweils andere Anschluß über Rückschlagventile gesperrt ist.

Nach einem anderen bevorzugten Merkmal der Erfindung ist vorgesehen, daß in einer Leitung mehrere parallel geschaltete Drosselventile unterschiedlichen Drosselquerschnittes angeordnet sind, wobei die unterschiedlichen Drosselventile auf unterschiedliche Knickwinkelbereiche umschaltbar sind. Auf diese Weise können besonders gefährliche Knickwinkelbereiche deutlich abgegrenzt werden.

Indem ein Absperrventil in den hydraulischen Kreislauf eingesetzt wird, ergibt sich eine Konstantdämpfung, die beliebig hoch angesetzt sein kann und die sich durch die Zuordnung eines Überdruckventiles ergibt. Diese höhere Konstantdämpfung kann sich als notwendig erweisen, z.B. beim Ausfahren aus Parkbuchten oder bei plötzlich auftretenden gefährlichen Straßenverhältnissen, z.B. auf eisglatter Straße. Die Einschaltung der Konstantdämpfung kann sowohl aus dem subjektiven Empfinden des Fahrers über Tastendruck erfolgen als auch objektiv von einem ABS/ASR-System eingesteuert werden.

Gemäß seiner alternativen Lösung zum Einsatz von Hydraulikzylindern können auch Stoßdämpfer mit über den Hubweg unterschiedlicher Dämpfungscharakteristik zur Anwendung kommen.

Die Erfindung ist in einem Ausführungsbeispiel dargestellt und beschrieben.

Es zeigen:

Fig. 1    eine erfindungsgemäße Gelenkdämpfungsvorrichtung in der Seitenansicht,
Fig. 2    eine erfindungsgemäße Gelenkdämpfungsvorrichtung in der Draufsicht,
Fig. 3    eine schematische Darstellung eines Gelenkomnibusses,
Fig. 4    einen Hydraulikschaltplan,
Fig. 5    ein Diagramm Zylinderhub über Knickwinkel,
Fig. 6    ein Diagramm Hubgeschwindigkeit über Knickwinkel,
Fig. 7    ein Diagramm Dämpfungsmoment über Knickwinkel.

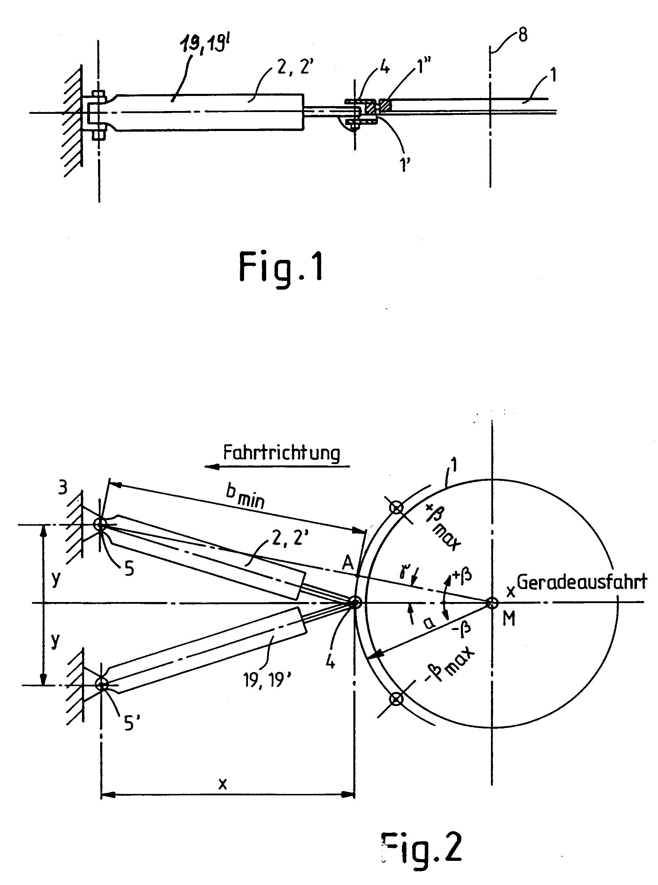

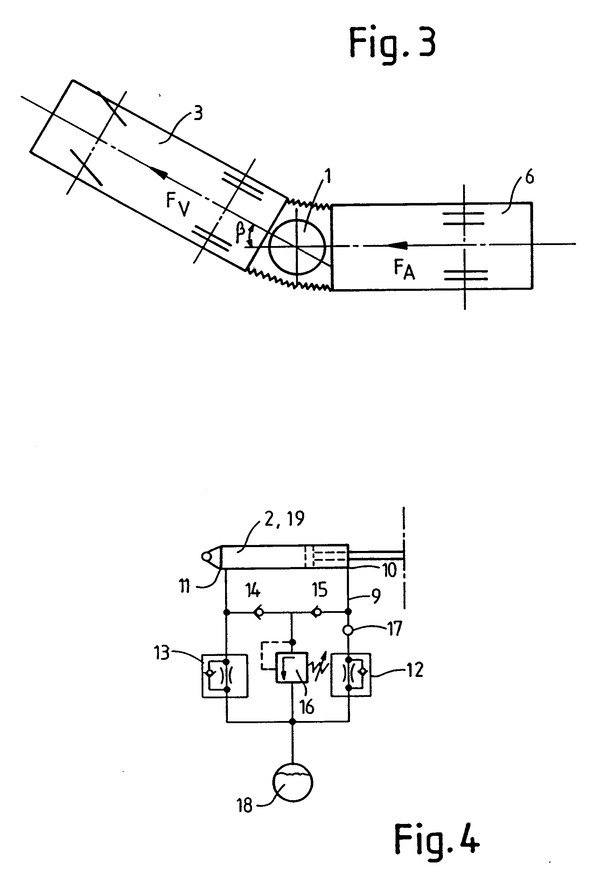

Fig. 3 zeigt einen Gelenkomnibus mit einem Vorderwagen 3 und einem Nachläufer 6, die über eine Drehkranzverbindung 1 miteinander gelenkig verbunden sind. Aus den Figuren 1 und 2 ist die Anordnung der erfindungsgemäßen Gelenkdämpfvorrichtung zu ersehen. Am Vorderwagen ist im Abstand y von der Längsmittelebene ein Hydraulikzylinder 2 oder Stoßdämpfer 2' in 5 gelenkig gelagert. Dazu symmetrisch ist auf der anderen Seite, ebenfalls im Abstand y von der Längsmittelebene, ein Hydraulikzylinder 19 oder Stoßdämpfer 19' in 5' gelenkig gelagert. Anderenendes sind die beiden Zylinder 2, 19 oder Stoßdämpfer 2', 19' in einer vertikalen Ebene auf der Längsmittelebene am Drehkranzaußenteil 1' gelenkig 4 angebunden. In dieser Position der Zylinder oder Stoßdämpfer befindet sich der Gelenkzug in Geradeausfahrt. Mit x ist der Abstand der Gelenkpunkte 5, 5' zu Gelenkpunkt 4 in der Längsmittel ebene bezeichnet, mit $b_{min}$ die innere Totlage der Hydraulikzylinder oder Stoßdämpfer, mit a ist der Radius des Drehkranzes, mit Winkel $\beta$ der Knickwinkel zwischen Vorderwagen 3 und Nachläufer 6. Winkel $\gamma$ ist der von der durch die Gerade von Punkt 5 oder 5' zu dem Mittelpunkt des Drehkranzes und der Längsmittelebene gebildete Winkel. Knickt nun der Nachläufer 6 nach links ein, so verschieben sich Hydraulikzylinder 2 bzw. Stoßdämpfer 2' und Hydraulikzylinder 19 bzw. Stoßdämpfer 19' nach rechts, wobei sich der Hub von 2, 2' bis zum Punkt A verkleinert und der Hub von 19, 19' sich in dem selben Maße bis zu Punkt A vergrößert. Im Punkt A ist das Moment von 2, 2' gleich 0. Auf dem Weg über A hinaus addieren sich dann die Momente der Zylinder 2, 19 oder der Stoßdämpfer 2', 19'.

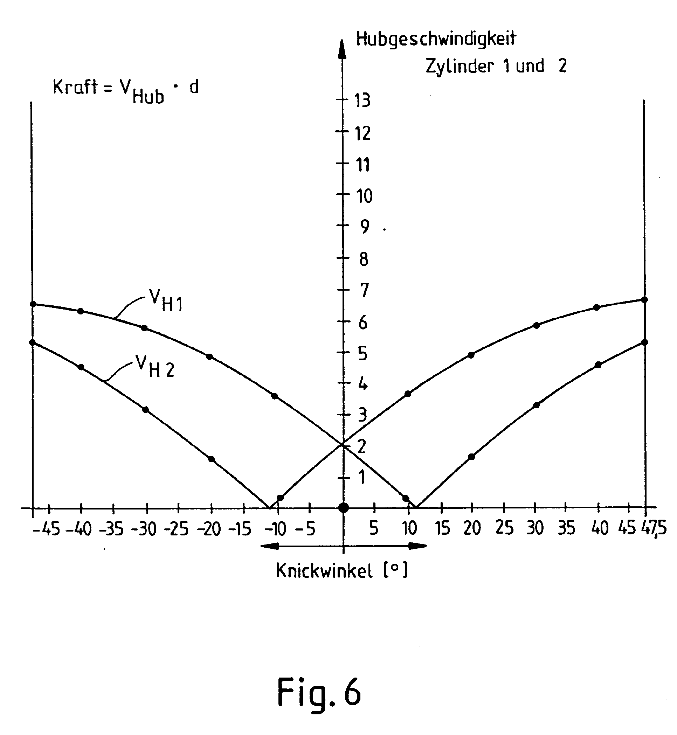

Dem Kolbenhubdiagramm nach Fig. 5 liegt folgende Gleichung zugrunde:

$$H \ = \ Hub \ = \ \sqrt{[(x+a)-(a-cos\beta)]^2 + [(a{\cdot}sin\beta)-y]^2} \ - \ \sqrt{x^2+y^2}$$

Dem Hubgeschwindigkeitsdiagramm nach Fig. 6 ist folgende Gleichung zugeordnet.

$$V_H \ = \ Hubgeschw. \ = \ \{\frac{\pi{\cdot}v_\beta{\cdot}0,1{\cdot}a[((x+a)-a{\cdot}cos\beta){\cdot}sin\beta + (a{\cdot}sin\beta - y){\cdot}cos\beta}{[180{\cdot}\sqrt{[[(x+a)-a{\cdot}cos\beta]^2 + (a{\cdot}sin\beta)-y)^2]}]}$$

$V_\beta = Knickwinkelgeschwindigkeit$
Gemäß der Formel

$$M = \ D{-}Moment \ = \ \left\{\frac{V_{Hub}{\cdot}d(b\,min+a)}{1000}\right\} \cdot \left\{\frac{a{\cdot}sin(\beta-\gamma)}{[(b_{min}+a)-a{\cdot}cos(\beta-\gamma)]^2 + [a{\cdot}sin(\beta-\gamma)]^2}\right\}$$

$$b_{min} \ = \ \sqrt{y^2 + (x+a)^2} \ - \ a$$

$$\gamma \ = \ arctan\frac{y}{x+a}$$

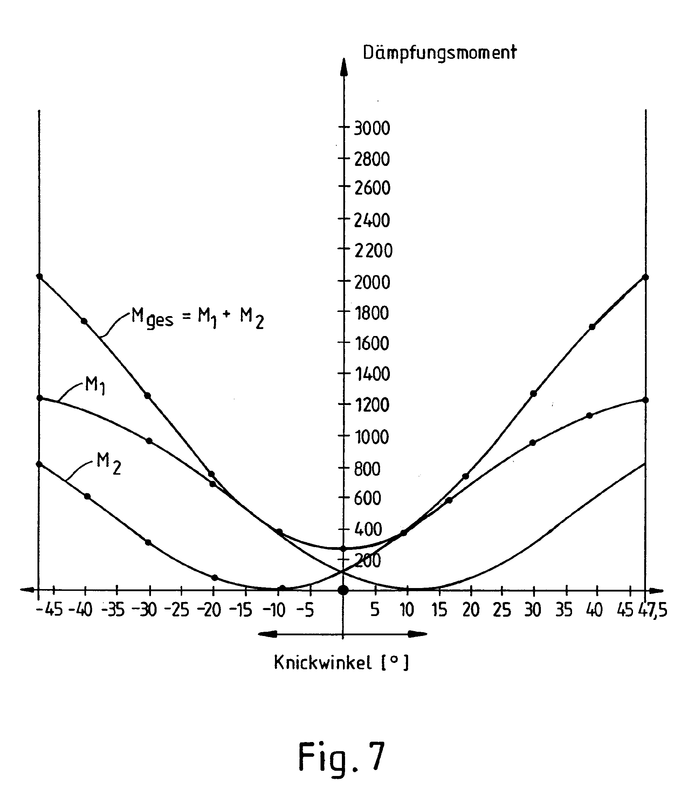

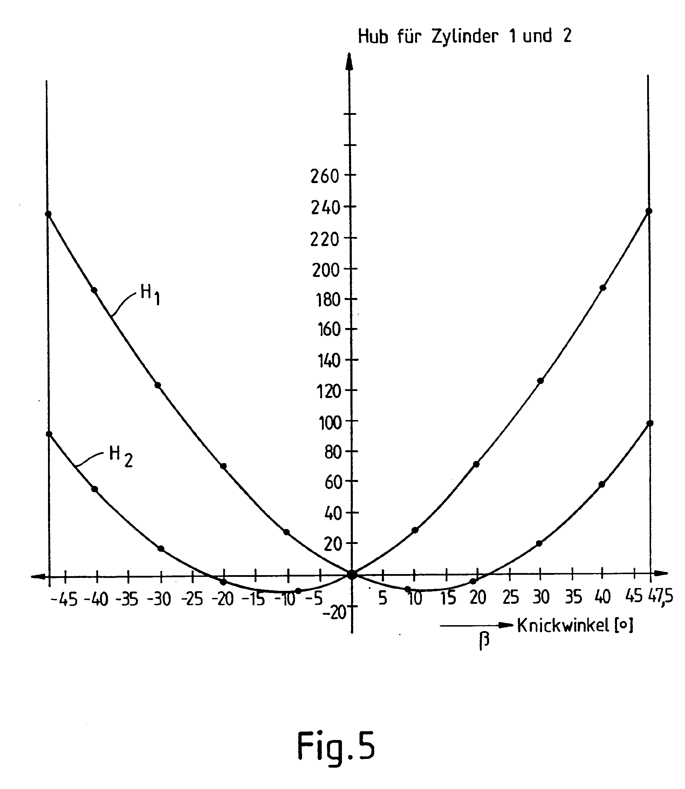

ergeben sich die Momentenkurven M1 und M2 und daraus resultierend die Momentenkurve Mges in Fig. 7. Der Drehmomentenverlauf zeigt einen praxisgerechten optimalen Verlauf der Dämpfungsmomentenkennlinie, wobei schon kurz nach der 0-Lage ein Moment aufgebaut ist, das einem "Schwänzeln" des Fahrzeuges entgegenwirkt und bei größerem Knickwinkel adäquat dem Ausknickrisiko das Dämpfungsmoment progressiv zunimmt.

Die Figur 4 zeigt einen Hydraulikschaltplan mit einem Zylinder 2, 19, der an seinen Enden Anschlüsse 10 und 11 aufweist, die durch eine Leitung 9 verbunden sind. Dem weiteren Verlauf der Leitung 9 sind auf parallelen Verbindungssträngen verstellbare Drosselventile 12 und 13 angeordnet. Jeweils ein Strang ist beaufschlagbar, da zwischen den Strängen gegeneinander geschaltete Absperrventile 14, 15 eingebaut sind, zwischen denen eine Leitung verläuft, in der ein Überdruckventil 16 eingebaut ist. Zum Ausgleich Von Leckverlusten und unterschiedlichen Hubvolumina ist im System ein Druckspeicher 18 eingebaut. Bei Anordnung von Drosselventilen 12, 13 können diese zur Modifizierung des Dämpfungsmomentes benutzt werden. Mit Hilfe des Absperrventiles 17 kann eine in verschiedenen Situationen wünschenswerte Konstantdämpfung eingeschaltet werden, deren Betrag sich über das Druckbegrenzungsventil 16 einstellen läßt. Die Zuschaltung des Absperrventils 17 kann in der Gefahrensituation vom Fahrer per Hand über eine entsprechende Drucktaste erfolgen oder automatisch durch ein ABS/ASR-System eingesteuert werden.

Die vorstehend dargestellten Ausführungsarten sind als Einzelanordnung beschrieben. Sie können aber auch als redundantes System ausgeführt werden, wobei man entweder den Vorteil von schlankeren Zylindern hat oder eben ein redundantes System erhält, das während des Fahrbetriebes nicht ausfallen kann.

Bezugszeichenliste

| | |
|---|---|
| 1 | Drehkranz |
| 1' | Drehkranzaußenring |
| 1" | Drehkranzinnenring |
| 2 | Hydraulikzylinder |
| 2' | Stoßdämpfer |
| 3 | Vorderwagen |
| 4 | Dreh- oder Kugelgelenk am Drehkranz |
| 5, 5' | Dreh- oder Kugelgelenk am Fahrzeug |
| 6 | Nachläufer |
| 7 | --- |
| 8 | Drehkranzmitte |
| 9 | Verbindungsleitung |
| 10 | Anschluß von 2, 19 |
| 11 | Anschluß von 2, 19 |
| 12 | Drosselventil |
| 13 | Drosselventil |
| 14 | Rückschlagventil |
| 15 | Rückschlagventil |
| 16 | Überdruckventil |
| 17 | Absperrventil |
| 18 | Druckspeicher |
| 19 | Hydraulikzylinder |
| 19' | Stoßdämpfer |
| $\beta$ | Knickwinkel |
| a | Radius (Kolbenanlenkpunkt-Drehkranzmitte) |
| H | Kolbenhub |
| $F_A$ | Antriebskraft |
| $F_V$ | Schubkraft am Vorderwagen |
| $V_H$ | Kolbenhubgeschwindigkeit |
| $M_1, M_2, M_{gs.}$ | Dämpfungsmomente |
| $V_\beta$ | Knickwinkelgeschwindigkeit Winkel zwischen 4-M oder 4'-M und Längsmittelebene |
| X, y | Koordinaten der Gelenkpunkte 5, 5' zur Längsmittelebene |

**Patentansprüche**

1.  Gelenkdämpfungsvorrichtung zur Verwendung bei einem Gelenkomnibus mit einem Vorderwagen (3) und einem mit diesem über einen Drehkranz (1) verbundenen Nachläufer (6), wobei zwischen den beiden Wagenkomponenten wenigstens zwei hydraulische Zylinder oder Stoßdämpfer (2,2',19,19') angeordnet sind, dadurch gekennzeichnet, daß die zwischen dem Vorderwagen (3) und dem mit dem Drehkranzaußenring (1') verbundenen Nachläufer (6) oder zwischen dem Nachläufer (6) und dem mit dem Drehkranzinnenring (1") verbundenen Vorderwagen (3) angebrachten Hydraulikzylinder (2, 19) oder Stoßdämpfer (2', 19") derart angeordnet sind, daß sich ein bei Geradeausfahrt wirksames Mindestdämpfungsmoment mit zunehmendem Knickwinkel sinusförmig vergrößert, und mit ihrem einen Ende gelenkig (5, 5') am Vorderwagen (3) oder Nachläufer (6) beiderseits der Längsmittelebene und mit ihrem anderen Ende gelenkig (4) am jeweiligen Drehkranzteil derart angeordnet sind, daß die Zylinder- bzw. Stoßdämpferachsen (5 - 4,5' - 4) bei Geradeausfahrt einen größeren Winkel zur Längsmittelebene bilden als die sich jeweils aus der minimalen Länge ($b_{min}$) der Hydraulikzylinder (2, 19) oder Stoßdämpfer (2', 19') zwischen den Anlenkpunkten (4; 5) und dem Radius (a) des Drehkranzes ergebenden Verbindungslinien (5-M, 5'-M), wodurch die innere Totlage des jeweils nach außen schwenkenden Hydraulikzylinders (2, 19) oder Stoßdämpfers (2', 19") erst nach einer gewissen Auslenkung des Gelenkes (4) aus der Längsmittelebene überschritten wird.

2.  Gelenkdämpfungsvorrichtung nach Anspruch 1, dadurch gekennzeichnet, daß die beiden Hydraulikzylinder (2, 19) oder Stoßdämpfer (2', 19') gleiche Länge, gleichen Hub und gleichen Durchmesser aufweisen.

**3.** Gelenkdämpfungsvorrichtung nach Anspruch 1 oder 2, dadurch gekennzeichnet, daß die gelenkigen Aufhängungen (4, 5, 5') der Hydraulikzylinder (2, 19) oder Stoßdämpfer (2', 19') symmetrisch zur Längsmittelebene angeordnet sind.

**4.** Gelenkdämpfungsvorrichtung nach den Ansprüchen 1 bis 3, dadurch gekennzeichnet, daß die gelenkigen Aufhängungen (4) der beiden Hydraulikzylinder (2, 19) oder Stoßdämpfer (2', 19') in einer vertikalen Ebene liegen.

**5.** Gelenkdämpfungsvorrichtung nach einem oder mehreren der Ansprüche 1 bis 4, dadurch gekennzeichnet, daß die beiden Hydraulikzylinder (2, 19) oder Stoßdämpfer (2', 19') jeweils in einer Horizontalebene angeordnet sind.

**6.** Gelenkdämpfungsvorrichtung nach einem oder mehreren der Ansprüche 1 bis 5, dadurch gekennzeichnet, daß ein Dämpfungsmoment auf den Nachläufer (6) schon bei Geradeausfahrt anliegt und der Anstieg des Dämpfungsmomentes über dem Knickwinkel im wesentlichen sinusförmig verläuft.

**7.** Gelenkdämpfungsvorrichtung nach einem oder mehreren der Ansprüche 1 bis 6, dadurch gekennzeichnet, daß in der Verbindungsleitung (9) zwischen den Anschlüssen (10, 11) der Verdrängungsräume der Hydraulikzylinder (2, 19) ein einstellbares Drosselventil (12) angeordnet ist.

**8.** Gelenkdämpfungsvorrichtung nach einem oder mehreren der Ansprüche 1 bis 7, dadurch gekennzeichnet, daß in der Verbindungsleitung (9) zwischen den Anschlüssen (10,11) des Hydraulikzylinders (2, 19) jedem Anschluß (10, 11) je ein einstellbares Drosselventil (12, 13) zugeordnet ist, wobei der jeweils andere Anschluß über ein Rückschlagventil (14, 15) gesperrt ist.

**9.** Gelenkdämpfungsvorrichtung nach einem oder mehreren der Ansprüche 1 bis 8, dadurch gekennzeichnet, daß in einer Leitung (9) mehrere parallel geschaltete Drosselventile (12, 13) unterschiedlichen Drosselquerschnitts angeordnet sind, wobei die unterschiedlichen Drosselventile auf unterschiedliche Knickwinkelbereiche umschaltbar sind.

**10.** Gelenkdämpfungsvorrichtung nach einem oder mehreren der Ansprüche 1 bis 9, dadurch gekennzeichnet, daß in der Verbindungsleitung (9) zwischen den Zylinderanschlüssen (10, 11) ein Absperrventil (17) angeordnet ist, welches in seiner Sperrstellung den Abfluß des Verdrängungsvolumens über die Drosselventile verhindert, wodurch eine Konstantdämpfung über den gesamten Knickwinkelbereich erreicht wird.

**11.** Gelenkdämpfungsvorrichtung nach Anspruch 10, dadurch gekennzeichnet, daß das Absperrventil (17) automatisch über ABS/ASR einschaltbar ist.

**12.** Gelenkdämpfungsvorrichtung nach einem oder mehreren der Ansprüche 1 bis 11, dadurch gekennzeichnet, daß beim Einsatz von Stoßdämpfern (2', 19') an sich bekannte Stoßdämpfer mit über den Hubweg unterschiedlicher Dämpfungscharakteristik eingesetzt sind.


## Claims

**1.** Articulated damping device for use in an articulated bus having a front carriage (3) and a trailer carriage (6) which is connected thereto by way of a crown gear (1), wherein at least two hydraulic cylinders or shock absorbers (2, 2', 19, 19') are arranged between the two carriage components, characterized in that the hydraulic cylinders (2, 19) or shock absorbers (2', 19"), which are mounted between the front carriage (3) and the trailer carriage (6) connected to the outer ring (1') of the crown gear or between the trailer carriage (6) and the front carriage (3) connected to the inner ring (1") of the crown gear, are arranged such that a minimum damping moment effective during straight travel increases approximately sinusoidally with increasing turning angle and are arranged with one end thereof articulated (5, 5') to the front carriage (3) or trailer carriage (6) on either side of the longitudinal centre plane, respectively, and with the other end thereof articulated (4) to the respective crown gear part such that the cylinder or shock absorber axes (5-4, 5'-4) during straight travel form a larger angle to the longitudinal centre plane than the connection lines (5-M, 5'-M) resulting respectively from the minimum length ($b_{min}$) of the hydraulic cylinders (2, 19) or shock absorbers (2', 19') between the articulation points (4; 5) and the radius (a) of the crown gear, as a result of which the inner deadcentre position of the respectively outwardly pivoting hydraulic cylinder (2, 19) or shock absorber (2', 19'') is not exceeded until a certain deflection of the articulated part (4) from the longitudinal centre plane is reached.

2. Articulated damping device according to Claim 1, characterized in that the two hydraulic cylinders (2, 19) or shock absorbers (2', 19') have the same length, the same stroke and the same diameter.

3. Articulated damping device according to Claim 1 or 2, characterized in that the articulated suspensions (4, 5, 5') of the hydraulic cylinders (2, 19) or shock absorbers (2', 19') are arranged symmetrically with respect to the longitudinal centre plane.

4. Articulated damping device according to Claims 1 to 3, characterized in that the articulated suspensions (4) of the two hydraulic cylinders (2, 19) or shock absorbers (2', 19') lie in a vertical plane.

5. Articulated damping device according to one or more of Claims 1 to 4, characterized in that the two hydraulic cylinders (2, 19) or shock absorbers (2', 19') are each arranged in a horizontal plane.

6. Articulated damping device according to one or more of Claims 1 to 5, characterized in that a damping moment acts on the trailer carriage (6) even during straight travel and the rise of the damping moment above the turning angle is substantially sinusoidal.

7. Articulated damping device according to one or more of Claims 1 to 6, characterized in that an adjustable throttle valve (12) is arranged in the connection line (9) between the connections (10, 11) of the displacement chambers of the hydraulic cylinders (2, 19).

8. Articulated damping device according to one or more of Claims 1 to 7, characterized in that there is associated with each connection (10, 11) a respective adjustable throttle valve (12, 13) in the connection line (9) between the connections (10, 11) of the hydraulic cylinder (2, 19), wherein the respectively other connection is blocked by way of a non-return valve (14, 15).

9. Articulated damping device according to one or more of Claims 1 to 8, characterized in that a plurality of throttle valves (12, 13) connected in parallel and of different throttle cross-section are arranged in a lino (9), wherein the different throttle valves can be switched to different turning angle ranges.

10. Articulated damping device according to one or more of Claims 1 to 9, characterized in that there is arranged in the connection line (9) between the cylinder connections (10, 11) a shut-off valve (17) which, in its blocking position, prevents the outflow of the displacement volume via the throttle valves, as a result of which a constant damping over the entire turning angle range is achieved.

11. Articulated damping device according to Claim 10, characterized in that the shut-off valve (17) can be activated automatically by way of ABS/ASR.

12. Articulated damping device according to one or more of Claims 1 to 11, characterized in that, when using shock absorbers (2', 19'), shock absorbers which are known per se and which have a damping characteristic which is different along the stroke displacement are used.

**Revendications**

1. Dispositif d'amortissement d'une articulation applicable à un autobus articulé, composé d'un véhicule amont (3) et d'un véhicule aval ou véhicule suiveur (6) relié au précédent par une couronne de pivotement (1), au moins deux vérins hydrauliques ou amortisseurs (2, 2', 19, 19') étant prévus entre les deux véhicules constituant l'autobus, caractérisé en ce que les vérins hydrauliques (2, 19) ou amortisseurs (2', 19'') prévus entre le véhicule amont (3) et le véhicule aval (6) relié au précédent par la cage extérieure (1') de la couronne de pivotement ou entre le véhicule suiveur et le véhicule amont (3) relié à celui-ci par l'intermédiaire de la cage intérieure (1'') de la couronne de pivotement, sont montés pour que le couple d'amortissement minimum agissant pour le déplacement en ligne droite augmente selon un tracé sensiblement sinusoïdal en fonction de l'augmentation de l'angle de flexion, une extrémité des vérins/amortisseurs étant reliée de manière articulée (5, 5') sur le véhicule amont (3) ou sur le véhicule suiveur (6), de part et d'autre du plan longitudinal médian, leur autre extrémité étant reliée de manière articulée 4 en un point respectif de la partie de couronne de pivotement de façon que les axes des vérins ou amortisseurs (5 - 4, 5' - 4) pour le déplacement sur une trajectoire rectiligne, forment un angle plus grand par rapport au plan longitudinal médian que celui qui existe chaque fois pour la longueur minimale ($b_{min}$) des vérins hydrauliques (2, 19) ou amortisseurs (2', 19') entre les points d'articulation (4, 5) et les lignes de liaison (5-M, 5'-M) correspondant au rayon (a) de la couronne de pivotement, de sorte que la position morte intérieure du vérin hydraulique (2, 19) chaque fois basculé vers l'extérieur ou des amortisseurs (2', 19'') ne soit dépassée qu'après un certain débattement de l'articulation (4) par rapport au plan longitudinal médian.

2. Dispositif d'amortissement d'une articulation selon la revendication 1, caractérisé en ce que les deux vérins hydrauliques (2, 19) ou amortisseurs (2', 19') ont la même longueur, la même course et le même diamètre.

3. Dispositif d'amortissement d'une articulation selon la revendication 1 ou 2, caractérisé en ce que les suspensions articulées (4, 5, 5') des vérins hydrauliques (2, 19) ou amortisseurs (2', 19') sont montées symétriquement par rapport au plan longitudinal médian.

4. Dispositif d'amortissement d'une articulation selon l'une des revendications 1 à 3, caractérisé en ce que les suspensions articulées (4) des deux vérins hydrauliques (2, 19) ou amortisseurs (2', 19') se situent dans un plan vertical.

5. Dispositif d'amortissement d'une articulation selon l'une ou plusieurs des revendications 1-4, caractérisé en ce que les deux vérins hydrauliques (2, 19) ou amortisseurs (2', 19') sont prévus chaque fois dans un plan horizontal.

6. Dispositif d'amortissement d'une articulation selon une ou plusieurs des revendications 1-5, caractérisé par un couple d'amortissement s'exerçant sur le véhicule suiveur (6) dès le déplacement en trajectoire rectiligne et l'augmentation du couple d'amortissement se fait suivant un tracé essentiellement sinusoïdal en fonction de l'angle de flexion.

7. Dispositif d'amortissement d'une articulation selon une ou plusieurs des revendications 1-6, caractérisé en ce que dans la conduite de liaison (9) entre les branchements (10, 11) des chambres de refoulement des vérins hydrauliques (2, 19) il est prévu un organe d'étranglement (12) réglable.

8. Dispositif d'amortissement d'une articulation selon une ou plusieurs des revendications 1-7, caractérisé en ce que dans la conduite de liaison (9) entre les branchements (10, 11) du vérin hydraulique (2, 19), pour chaque branchement (10, 11) on a un organe d'étranglement (12, 13) réglable, l'autre branchement respectif étant fermé par un clapet anti-retour (14, 15).

9. Dispositif d'amortissement d'une articulation selon une ou plusieurs des revendications 1 à 8, caractérisé en ce que dans une conduite (9) on a plusieurs organes d'étranglement (12, 13) branchés en parallèle et ayant des sections d'étranglement différentes, ces organes d'étranglement différents pouvant commuter sur différentes plages d'angles de flexion.

10. Dispositif d'amortissement d'une articulation selon une ou plusieurs des revendications 1-9, caractérisé en ce que dans la conduite de liaison (9) entre les branchements de cylindres (10, 11) il est prévu un clapet d'arrêt (17) qui, en position d'arrêt, interdit le passage du volume de refoulement à travers l'organe d'étranglement ce qui donne un amortissement constant dans toute la plage de l'angle de flexion.

11. Dispositif d'amortissement d'une articulation, selon la revendication 10, caractérisé en ce que la soupape d'arrêt (17) se met en oeuvre automatiquement par le système ABS/ASR.

12. Dispositif d'amortissement d'une articulation selon une ou plusieurs des revendications 1-11, caractérisé en ce que pour l'application aux amortisseurs (2', 19') on utilise des amortisseurs connus en soi et ayant des caractéristiques d'amortissement différentes en fonction de la course.

# Fig.1

# Fig.2

## Fig. 3

## Fig. 4

Fig. 6

Fig. 7

Fig.5